# EUROPEAN PATENT APPLICATION

(11) **EP 4 534 282 A1**
(43) Date of publication of application: **09.04.2025**
(21) Application number: 23811740.2
(22) Date of filing: 18.05.2023
(51) Int. Cl.: B32B 3/02, B27M 1/08, E04B 2/72

(54) **STRUCTURE AND PLATE MATERIAL**

(30) Priority: 24.05.2022 JP 2022084407
(71) Applicant: Nature Architects Inc., Tokyo 103-0011 (JP)
(72) Inventor: OHSHIMA Taisuke, Tokyo 103-0011 (JP)
(74) Representative: Kuhnen & Wacker Patent- und Rechtsanwaltsbüro PartG mbB
(86) International application number: PCT/JP2023/018650
(87) International publication number: WO 2023/228867

(57) **Abstract**

A structure includes a board, and a sheet attached to one surface of the board. The board includes a first part, a second part, and a connecting part that connects the first part and the second part and is configured to allow bending deformation on the other surface side of the board. The connecting part includes one or more beam portions that is positioned between the first and second parts and extends in a direction different from a connecting direction in which the first and second parts are connected via the connecting part, one or more first support portions that support the corresponding beam portion from the first part side at one or more first positions, and one or more second support portions that support the corresponding beam portion from the second part side at one or more second positions different from the one or more first positions.

## Description

### Technical Field

The present disclosure relates to a structure and a board.

### Background

Conventionally, a proposed decorative metal board includes a metal board, a colored layer that conceals the surface of the metal board, an ink-spray-coated pattern layer arranged on the surface of the colored layer, and a thermoplastic resin film layer that has translucency on the surface of the pattern layer (see Patent Document 1). In this decorative metal board, the ink-spray-coated pattern layer possesses greater elongation than the stretch deformation of the outer R surface of the ink-spray-coated pattern layer during the bending process of the metal board, thereby suppressing the occurrence of cracks in the ink-spray-coated pattern layer during the bending process.

### Citation List

### Patent Literature

PTL1: Japanese Patent Laid-open No. 2018-108658

### Summary

The above decorative metal board requires the use of a special ink-spray-coated pattern layer with relatively high elongation to suppress the occurrence of cracks in the ink-spray-coated pattern layer during the bending process. Consequently, in a structure where a sheet is attached to one surface of a board, a challenge exists in using a sheet with relatively low elongation.

A main object of the present disclosure is, in a structure where a sheet is attached to one surface of a board, to suppress the occurrence of cracks in the sheet when the structure undergoes bending deformation on the other surface side of the board, even when a sheet with relatively low elongation is used.

In order to achieve the above main object, the present disclosure employs the following configuration.

A structure according to the present disclosure is a structure that includes a board, and a sheet attached to one surface of the board. The board includes a first part, a second part spaced apart from the first part, and a connecting part that connects the first part and the second part and is configured to allow bending deformation on the other surface side opposite to the one surface of the board. The connecting part includes one or more beam portions that are positioned between the first and second parts and extend in a direction different from a connecting direction in which the first and second parts are connected via the connecting part, one or more first support portions that support the corresponding beam portion from the first part side at one or more first positions in the extending direction of the beam portion, and one or more second support portions that support the corresponding beam portion from the second part side at one or more second positions different from the one or more first positions in the extending direction of the beam portion.

The structure according to the present disclosure, through the above configuration, suppresses in-plane deformation on the one surface side of the connecting part (the side with the sheet) resulting from the twisting and bending of the one or more beam portions when the structure (connecting part) undergoes bending deformation on the other surface side of the board. Specifically, this prevents the increase in length in the connecting direction on the one surface side of the connecting part. As a result, significant stress in the connecting direction on the sheet is suppressed. Therefore, even when using a sheet that does not have high elongation, the occurrence of cracks in the sheet is prevented.

### Brief Description of Drawings

Fig. 1 is an external perspective view of a structure 20 according to one embodiment.
Fig. 2 is a top view of the structure 20.
Fig. 3 is an external perspective view of the structure 20 when it undergoes bending deformation on the lower surface side of the board 22.
Fig. 4 is an external perspective view of a structure 120 of another modification.
Fig. 5 is a top view of the structure 120.
Fig. 6 is an external perspective view of the structure 120 when it undergoes bending deformation on the lower surface side of the board 22.

### Description of Embodiments

The following describes some aspects of the present disclosure with reference to embodiments.

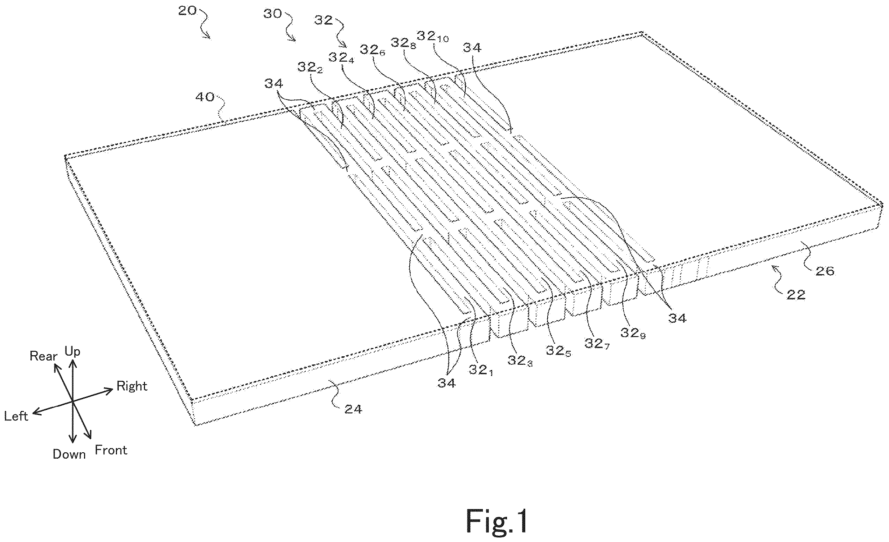

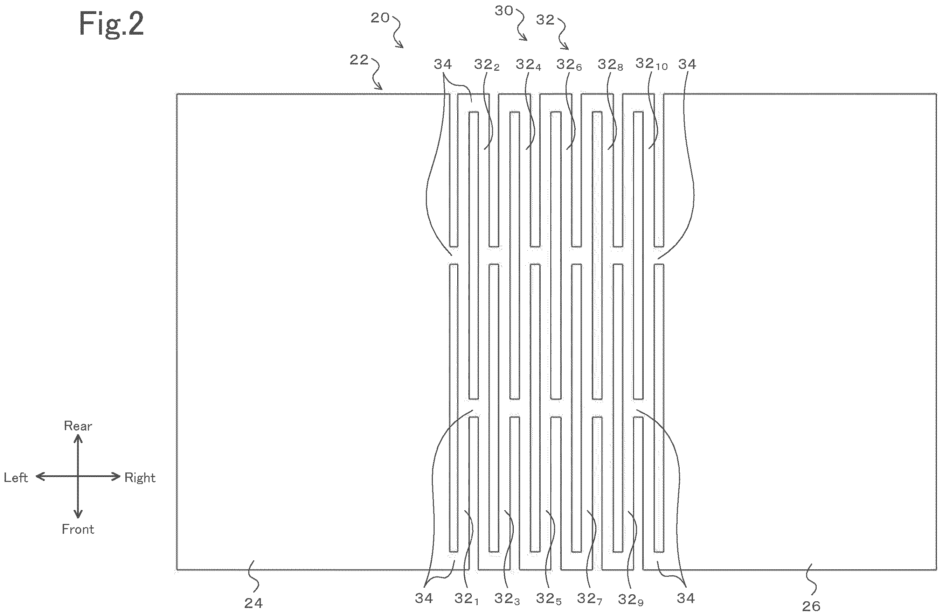

Fig. 1 is an external perspective view of a structure 20 of an embodiment of the present disclosure. Fig. 2 is a top view of the structure 20. Note that the left-right direction, front-rear direction, and up-down direction of the structure 20 are as illustrated in Figs. 1 and 2. Additionally, for clarity, a sheet 40 is illustrated with a dashed line in Fig. 1 and omitted in Fig. 2.

As illustrated, the structure 20 of the embodiment has a rectangular flat plate shape and includes a rectangular flat plate-shaped board 22 and a sheet 40 attached to one surface of the board 22 (the upper surface in Fig. 1). The board 22 is a single integral component that can be formed integrally through methods such as injection molding, blow molding, extrusion molding, and 3D printing of resin materials, or casting, forging, pressing, machining, extrusion molding, and 3D printing of metal materials. Alternatively, it can be formed by processing holes in resin plates, metal plates, or wooden boards. The sheet 40 is formed into a sufficiently thin sheet shape compared to the board 22, with examples including resin sheet, metal sheet, wood sheet, and paper sheet.

The board 22 includes a rectangular first part 24, a rectangular second part 26 spaced apart from the first part 24, and a connecting part 30 that connects the first part 24 and the second part 26. Hereafter, among the extending directions of the board 22 (the left-right direction and the front-rear direction in Figs. 1 and 2), the direction in which the first part 24 and the second part 26 are connected via the connecting part 30 (the left-right direction in Figs. 1 and 2) is referred to as the "connecting direction", while the direction orthogonal to the connecting direction (the front-rear direction in Figs. 1 and 2) is referred to as the "connecting orthogonal direction".

The connecting part 30 includes ten beam portions 32 (32[1] to 32[10]) and twenty-two support portions 34. The numbers in brackets in the specification correspond to the order from the first part 24 side to the second part 26 side, labeled as 1, ..., 12, and correspond to the subscripts in the Figs. The ten beam portions 32 are arranged with intervals in the connecting direction between the first part 24 and the second part 26, extending in the connecting orthogonal direction. The twenty-two support portions 34 each extend in the connecting direction (the left-right direction in Fig. 1) and connect either the first part 24 to the beam portion 32, two adjacent beam portions 32, or the beam portion 32 to the second part 26.

Among the beam portions 32[1] to 32[10], the beam portion 32[1] closest to the first part 24 is connected to the first part 24 via each support portion 34 at the front end and at a position slightly rearward of the center in the front-rear direction (hereinafter referred to as the "rearward position"). The beam portion 32[10] closest to the second part 26 is also connected to the second part 26 via each support portion 34 at the front end and at the rearward position in the front-rear direction. Two adjacent beam portions 32[i] (i: 1, 3, 5, 7, 9) and 32[i+1] in the connecting direction are connected via each support portion 34 at the rear end and at a position slightly forward of the center in the front-rear direction (hereinafter referred to as the "forward position"). Two adjacent beam portions 32[j] (j: 2, 4, 6, 8) and 32[j+1] in the connecting direction are connected via each support portion 34 at the front end and at the rearward position in the front-rear direction. That is, each beam portion 32 is supported by each support portion 34 (the first support portion) from the first part 24 side at a first position in the extending direction of the beam portion 32 (one of the front end and rearward position or the rear end and forward position in the front-rear direction) and is also supported by each support portion 34 (the second support portion) from the second part 26 side at a second position, which differs from the first position (the other of the front end and rearward position or the rear end and forward position in the front-rear direction). In the embodiment, the front end, frontward position, rearward position, and rear end in the front-rear direction of the first part 24, the second part 26, and the connecting part 30 are positioned approximately at equal intervals from the front side in this order.

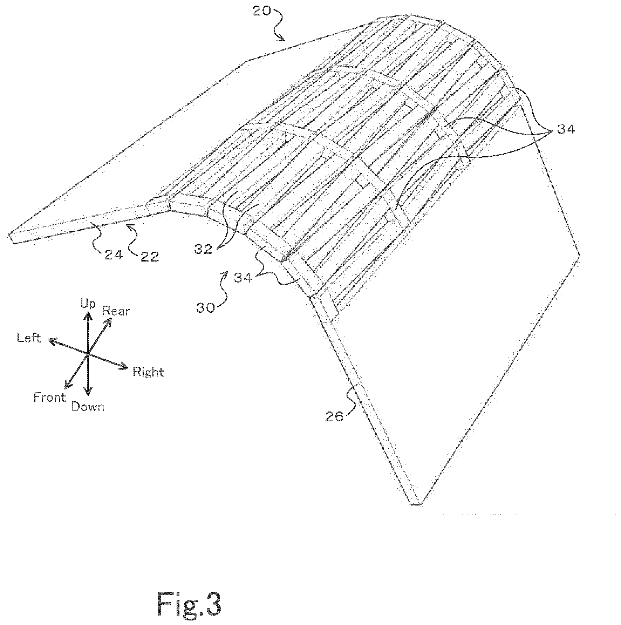

Fig. 3 is an external perspective view of the structure 20 when it undergoes bending deformation on the lower surface side of the board 22 (the side opposite to the sheet 40). Note that, for clarity, the depiction of the sheet 40 is omitted in Fig. 3. As illustrated, when the structure 20 undergoes bending deformation on the lower surface side of the board 22, the deflection and twisting of each beam portion 32 of the connecting part 30 cause the length on the lower side of the connecting part 30 (the distance between two adjacent support portions 34 in the connecting direction, which is curved from the front in Fig. 3) to decrease. Consequently, the in-plane deformation on the upper side of the connecting part 30 is suppressed, specifically, the increase in length in the connecting direction (the distance between two adjacent support portions 34 in the connecting direction) is suppressed. The bending and twisting of each beam portion 32 is caused by the fact that each beam portion 32 is supported by each support portion 34 (the first support portion) from the first part 24 side at a first position in the extending direction of the beam portion 32, and is also supported by each support portion 34 (the second support portion) from the second part 26 side at a second position that differs from the first position. Suppressing the increase in length in the connecting direction on the upper side of the connecting part 30 allows for the suppression of significant stress in the connecting direction on the sheet 40. Therefore, even when using a sheet 40 that does not have high elongation, the occurrence of cracks in the sheet 40 is prevented. Viewed differently, the structure 20 (connecting part 30) can bend to a desired curvature while in-plane deformation on the upper surface side of the connecting part 30 is suppressed by the sheet 40. The beam portions 32 may undergo plastic deformation to maintain the bending deformation state of the connecting part 30, or they may deform within the elastic region to allow the connecting part 30 to return from the bent state to its original flat plate condition.

In the structure 20 described in the above embodiment, the sheet 40 is attached to one surface of the board 22, and the first part 24 and the second part 26 of the board 22 are connected via the connecting part 30. The connecting part 30 includes ten beam portions 32 (32[1] to 32[10]) and twenty-two support portions 34. The beam portion 32[1] is connected to the first part 24, and the beam portion 32[10] is connected to the second part 26. The beam portions 32[j] (j : 2, 4, 6, 8) and 32 [j+1] are connected via the support portions 34 at the front end and rearward position in the front-rear direction, while the beam portions 32[i] (i: 1, 3, 5, 7, 9) and 32[i+1] are connected via the support portions 34 at the rear end and frontward position in the front-rear direction. That is, each beam portion 32 is supported by each support portion 34 (the first support portion) from the first part 24 side (from the left side as illustrated in Fig. 1, etc.) at a first position in the extending direction of the beam portion 32 and is also supported by each support portion 34 (the second support portion) from the second part 26 side (from the right side as illustrated in Fig. 1, etc.) at a second position, which differs from the first position. With this configuration, when the structure 20 undergoes bending deformation on the opposite side of the board 22 (the side opposite to the sheet 40), significant stress in the connecting direction on the sheet 40 is suppressed. Therefore, even when using a sheet 40 that does not have high elongation, the occurrence of cracks in the sheet 40 is prevented.

In the structure 20 of the embodiment, the connecting part 30 of the board 22 includes ten beam portions 32. However, the number of beam portions 32 is not limited to this and can be one or more. Additionally, in the structure 20, the first part 24 and the beam portion 32, the two adjacent beam portions 32, and the beam portion 32 and the second part 26, are each connected by two support portions 34. However, the number of support portions 34 is not limited to this and can be one or more for each connection. Furthermore, the number of support portions 34 does not have to be constant. For example, the first part 24 and the beam portion 32, as well as the beam portion 32 and the second part 26, may each be connected by two support portions 34, while the two adjacent beam portions 32 may each be connected by one support portion 34.

In a structure similar to the structure 20, which includes the board 22 with the connecting part 30, the number of beam portions 32 and other parameters can be designed as follows. First, the desired curvature *φ* of the connecting part 30 and the thickness T of the board 22 (specifically, the connecting part 30) are set. Next, based on the desired curvature *φ* of the connecting part 30 and the thickness T of the board 22, the in-plane deformation amount Dip on one surface side of the connecting part 30 (the side of the sheet 40) is calculated. The in-plane deformation amount Dip is determined within a range that does not cause cracks in the sheet 40. Then, based on the calculated in-plane deformation amount Dip, the length Lg of the gap in the connecting direction between the first part 24 and the beam portion 32, the two adjacent beam portions 32, and the beam portion 32 and the second part 26 of the connecting part 30, as well as the distance Wg in the direction orthogonal to the connection between, for example, two support portions 34 spanning the gap, and the number Ng of gaps (the number of beam portions 32 plus one) are determined. In this way, the number of beam portions 32 and other parameters can be designed."

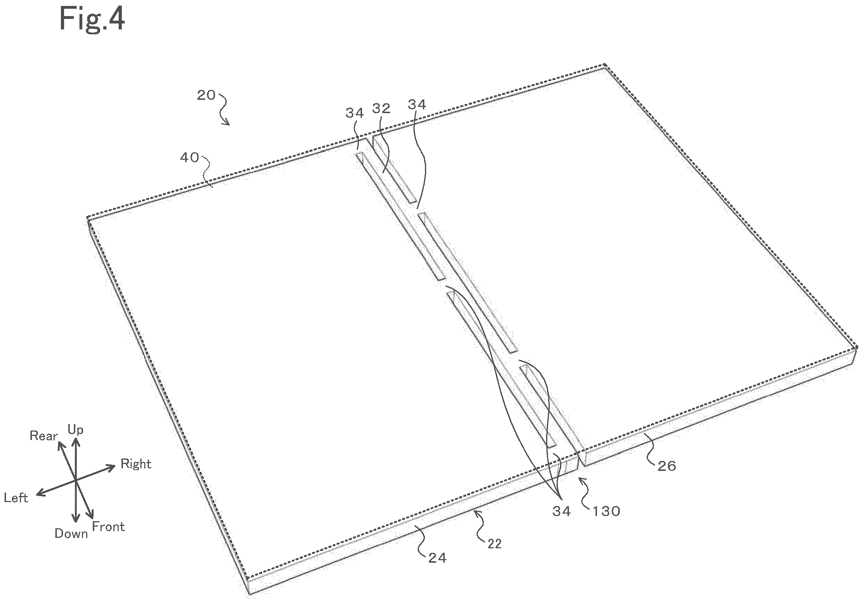

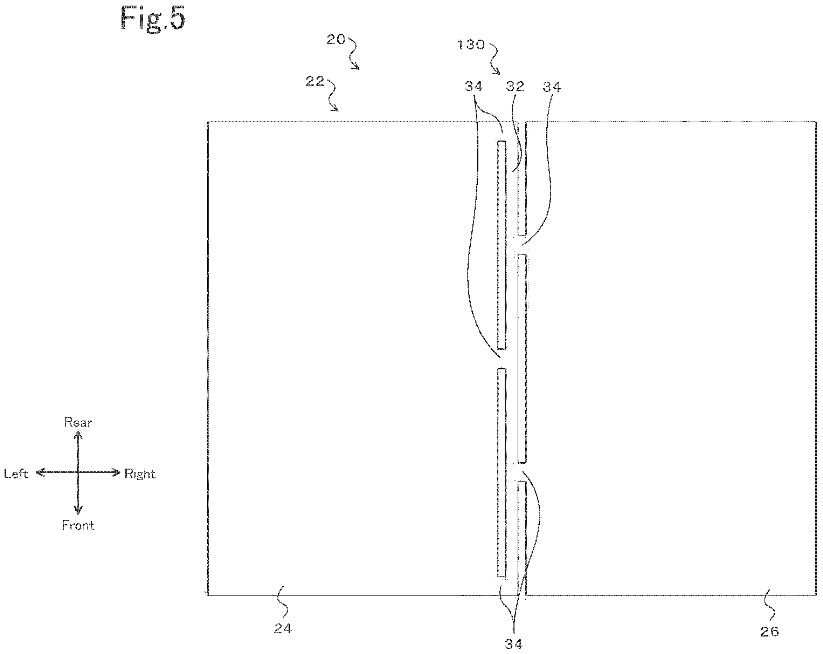

The following describes the case where there is one beam portion 32. Fig. 4 is an external perspective view of a structure 120 of another modification. Fig. 5 is a top view of the structure 120. Note that the left-right direction, front-rear direction, and up-down direction of the structure 120 are as illustrated in Figs. 4 and 5. Additionally, for clarity, a sheet 40 is illustrated with a dashed line in Fig. 4 and omitted in Fig. 5.

The structure 120 shown in Figs. 4 and 5 differs from the structure 20 shown in Figs. 1 and 2 in that the connecting part 30 of the board 22 has been replaced with the connecting part 130. The connecting part 130 includes one beam portion 32 and five support portions 34. The beam portion 32 is provided between the first part 24 and the second part 26, extending in the connecting orthogonal direction. Each of the five support portions 34 extends in the connecting direction (left-right direction in Fig. 5) and connects the first part 24 to the beam portion 32, or the beam portion 32 to the second part 26.

The beam portion 32 is connected to the first part 24 via each support portion 34 at the front end, center, and rear end in the front-rear direction. Additionally, the beam portion 32 is connected to the second part 26 via each support portion 34 at positions between the front end and the center (hereinafter referred to as the "front intermediate position") and between the center and the rear end (hereinafter referred to as the "rear intermediate position") in the front-rear direction. That is, each beam portion 32 is supported by each support portion 34 (the first support portion) from the first part 24 side at the first position in the extending direction of the beam portion 32 (the front end, center, and rear end in the front-rear direction) and is also supported by each support portion 34 (the second support portion) from the second part 26 side at the second position that differs from the first position (the front intermediate position and rear intermediate position in the front-rear direction). In the modification, the front end, front intermediate position, center, rear intermediate position, and rear end in the front-rear direction of each of the first part 24, second part 26, and connecting part 130 are positioned approximately at equal intervals from the front side in this order.

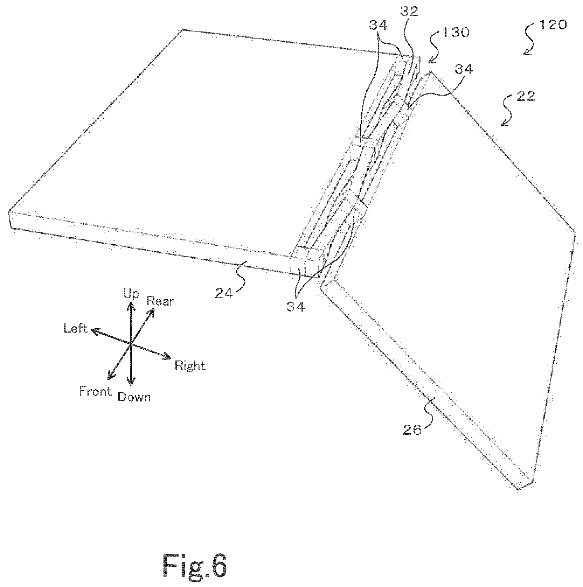

Fig. 6 is an external perspective view of the structure 120 when it undergoes bending deformation on the lower surface side of the board 22 (the side opposite to the sheet 40). Note that, for clarity, the depiction of the sheet 40 is omitted in Fig. 6. As illustrated, when the structure 120 undergoes bending deformation on the lower surface side of the board 22, the deflection and twisting of the beam portion 32 of the connecting part 30 suppress the in-plane deformation on the upper surface side of the connecting part 30. Specifically, they suppress the increase of the length in the connecting direction (the direction of bending observed from the front side in Fig. 6). Thus, similarly to the embodiment, significant stress in the connecting direction on the sheet 40 is suppressed. Therefore, even when using a sheet that does not have high elongation, the occurrence of cracks in the sheet 40 is prevented. Viewed differently, the structure 120 (connecting part 130) can bend to a desired curvature while the in-plane deformation on the upper surface side of the connecting part 30 is suppressed by the sheet 40.

In the structure 20 of the embodiment, the board 22 is configured as a single integral member. However, it may also be configured as multiple parts that are molded or formed and then joined together. The same applies to the structure 120 in the modification.

In the embodiment, the sheet 40 is attached to one surface of the board 22, resulting in an overall flat plate shape for the structure 20. However, it may also take the form of the structure 20 in a state where it is bent on the other side of the board 22 (the side opposite to the sheet 40), as shown in Fig. 3. This also applies to the configuration of the board 22 used in the structure 20. The same applies to the structure 120 in the modification.

The following describes the correspondence relationship between the primary elements of the above embodiment and the primary elements of the disclosure described in the Summary. In the embodiment, each beam portion 32 corresponds to the "beam portion", the support portions 34 extending from each beam portion 32 to the first part 24 correspond to the "first support portion", and the support portions 34 extending from each beam portion 32 to the second part 26 correspond to the "second support portion".

The correspondence relationship between the primary components of the embodiment and the primary components of the disclosure, regarding which the problem is described in the Summary, should not be considered to limit the components of the disclosure, regarding which the problem is described in the Summary, since the embodiment is only illustrative to specifically describes the aspects of the disclosure, regarding which the problem is described in the Summary. In other words, the disclosure, regarding which the problem is described in the Summary, should be interpreted on the basis of the description in the Summary, and the embodiment is only a specific example of the disclosure, regarding which the problem is described in the Summary.

The aspect of the disclosure is described above with reference to the embodiment. The disclosure is, however, not limited to the above embodiment but various modifications and variations may be made to the embodiment without departing from the scope of the disclosure.

A first structure according to the present disclosure is a structure that includes a board, and a sheet attached to one surface of the board. The board includes a first part, a second part spaced apart from the first part, and a connecting part that connects the first part and the second part and is configured to allow bending deformation on the other surface side opposite to the one surface of the board. The connecting part includes one or more beam portions that are positioned between the first and second parts and extend in a direction different from a connecting direction in which the first and second parts are connected via the connecting part, one or more first support portions that support the corresponding beam portion from the first part side at one or more first positions in the extending direction of the beam portion, and one or more second support portions that support the corresponding beam portion from the second part side at one or more second positions different from the first positions in the extending direction of the beam portion.

The structure according to the present disclosure, through the above configuration, suppresses the in-plane deformation on the one surface side of the connecting part (the side with the sheet) resulting from the twisting and bending of the one or more beam portions when the structure (connecting part) undergoes bending deformation on the other surface side of the board. Specifically, this prevents the increase in length in the connecting direction on the one surface side of the connecting part. As a result, the significant stress in the connecting direction on the sheet is suppressed. Therefore, even when using a sheet that does not have high elongation, the occurrence of cracks in the sheet is prevented.

In the first structure according to the present disclosure, the connecting part may include the beam portion, and the beam portion is connected to the first part via the one or more first support portions and to the second part via the one or more second support portions. The connecting part may include the beam portions lined up at intervals from the first part side to the second part side, and each of the beam portions is connected to the first part or to the adjacent beam portion on the first part side via the one or more first support portions and to the second part or to the adjacent beam portion on the second part side via the one or more second support portions.

A second structure according to the present disclosure is a structure that includes a board, and a sheet attached to one surface of the board. The board includes a first part, a second part spaced apart from the first part, and a connecting part that connects the first part and the second part. The connecting part includes one or more beam portions that are positioned between the first and second parts and extend in a direction different from a connecting direction in which the first and second parts are connected via the connecting part, one or more first support portions that support the corresponding beam portion from the first part side at one or more first positions in the extending direction of the beam portion, and one or more second support portions that support the corresponding beam portion from the second part side at one or more second positions different from the one or more first positions in the extending direction of the beam portion. The structure is bent at the position of the connecting part on the other surface side opposite to the one surface of the board.

In the second structure according to the present disclosure, the board includes the first part, the second part spaced apart from the first part, and the connecting part that connects the first part and the second part. In this case, the connecting part includes the one or more beam portions that is positioned between the first and second parts and extends in the direction different from the connecting direction in which the first and second parts are connected via the connecting part, the one or more first support portions that support the corresponding beam portion from the first part side at the one or more first positions in the extending direction of the beam portion, and the one or more second support portions that support the corresponding beam portion from the second part side at the one or more second positions different from the one or more first positions in the extending direction of the beam portion. Additionally, the structure is bent at the position of the connecting part on the other surface side opposite to the one surface of the board. In this structure, the in-plane deformation on the one surface side of the connecting part (the side with the sheet) is suppressed due to the twisting and bending of the one or more beam portions when the structure (connecting part) undergoes bending deformation on the other surface side of the board. Specifically, the increase in length in the connecting direction on the one surface side of the connecting part is prevented. As a result, the significant stress in the connecting direction on the sheet is suppressed. Therefore, the occurrence of cracks in the sheet is prevented.

A board according to the present disclosure is a board used in a structure that includes a board, and a sheet attached to one surface of the board. The board includes a first part, a second part spaced apart from the first part, and a connecting part that connects the first part and the second part and is configured to allow bending deformation on the other surface side opposite to the one surface of the board. The connecting part includes one or more beam portions that are positioned between the first and second parts and extend in a direction different from a connecting direction in which the first and second parts are connected via the connecting part, one or more first support portions that support the corresponding beam portion from the first part side at one or more first positions in the extending direction of the beam portion, and one or more second support portions that support the corresponding beam portion from the second part side at one or more second positions different from the one or more first positions in the extending direction of the beam portion.

In the board according to the present disclosure, the board includes the first part, the second part spaced apart from the first part, and the connecting part that connects the first part and the second part. In this case, the connecting part includes the one or more beam portions that is positioned between the first and second parts and extends in the direction different from the connecting direction in which the first and second parts are connected via the connecting part, the one or more first support portions that support the corresponding beam portion from the first part side at the one or more first positions in the extending direction of the beam portion, and the one or more second support portions that support the corresponding beam portion from the second part side at the one or more second positions different from the one or more first positions in the extending direction of the beam portion. Thus, the in-plane deformation on the one surface side of the connecting part (the side with the sheet) is suppressed due to the twisting and bending of the one or more beam portions when the structure (connecting part) undergoes bending deformation on the other surface side of the board. Specifically, the increase in length in the connecting direction on the one surface side of the connecting part is prevented. As a result, the significant stress in the connecting direction on the sheet is suppressed. Therefore, the occurrence of cracks in the sheet is prevented.

## Claims

1. A structure comprising: a board; and a sheet attached to one surface of the board,
wherein the board includes a first part, a second part spaced apart from the first part, and a connecting part that connects the first part and the second part and is configured to allow bending deformation on the other surface side opposite to the one surface of the board,
the connecting part includes one or more beam portions that are positioned between the first and second parts and extend in a direction different from a connecting direction in which the first and second parts are connected via the connecting part, one or more first support portions that support the corresponding beam portion from the first part side at one or more first positions in the extending direction of the beam portion, and one or more second support portions that support the corresponding beam portion from the second part side at one or more second positions different from the one or more first positions in the extending direction of the beam portion, and
the connecting part is further configured such that, when the structure undergoes bending deformation on the other surface side, the length in the connecting direction on the other surface side is prevented from becoming shorter and the length in the connecting direction on the one surface side is prevented from becoming longer, due to the bending and twisting of the one or more beam portions, compared to before the structure undergoes bending deformation.

2. The structure according to Claim 1,
wherein the connecting part includes the beam portion, and
the beam portion is connected to the first part via the one or more first support portions and to the second part via the one or more second support portions.

3. The structure according to Claim 1,
wherein the connecting part includes the beam portions lined up at intervals from the first part side to the second part side, and
each of the beam portions is connected to the first part or to the adjacent beam portion on the first part side via the one or more first support portions and to the second part or to the adjacent beam portion on the second part side via the one or more second support portions.

4. A structure comprising: a board; and a sheet attached to one surface of the board,
wherein the board includes a first part, a second part spaced apart from the first part, and a connecting part that connects the first part and the second part,
the connecting part includes one or more beam portions that are positioned between the first and second parts and extend in a direction different from a connecting direction in which the first and second parts are connected via the connecting part, one or more first support portions that support the corresponding beam portion from the first part side at one or more first positions in the extending direction of the beam portion, and one or more second support portions that support the corresponding beam portion from the second part side at one or more second positions different from the one or more first positions in the extending direction of the beam portion,
the connecting part is further configured such that, when the structure undergoes bending deformation on the other surface side opposite to the one surface, the length in the connecting direction on the other surface side is prevented from becoming shorter and the length in the connecting direction on the one surface side is prevented from becoming longer, due to the bending and twisting of the one or more beam portions, compared to before the structure undergoes bending deformation, and
the structure is bent at the position of the connecting part on the other surface side of the board.

5. A board used in a structure comprising: a board; and a sheet attached to one surface of the board,
wherein the board includes a first part, a second part spaced apart from the first part, and a connecting part that connects the first part and the second part and is configured to allow bending deformation on the other surface side opposite to the one surface of the board,
the connecting part includes one or more beam portions that are positioned between the first and second parts and extend in a direction different from a connecting direction in which the first and second parts are connected via the connecting part, one or more first support portions that support the corresponding beam portion from the first part side at one or more first positions in the extending direction of the beam portion, and one or more second support portions that support the corresponding beam portion from the second part side at one or more second positions different from the one or more first positions in the extending direction of the beam portion, and
the connecting part is further configured such that, when the structure undergoes bending deformation on the other surface side, the length in the connecting direction on the other surface side is prevented from becoming shorter and the length in the connecting direction on the one surface side is prevented from becoming longer, due to the bending and twisting of the one or more beam portions, compared to before the structure undergoes bending deformation.
